# EUROPÄISCHE PATENTSCHRIFT

(11) **EP 1 108 584 B1**
(45) Veröffentlichungstag und Bekanntmachung des Hinweises auf die Patenterteilung: **04.08.2004**
(21) Anmeldenummer: 00124695.8
(22) Anmeldetag: 11.11.2000
(51) Int. Cl.: B60K 7/00

(54) **Radantriebsvorrichtung**
Wheel drive device
Dispositif d'entraînement des roues

(30) Priorität: 16.12.1999 DE 19960737
(43) Veröffentlichungstag der Anmeldung: 20.06.2001
(73) Patentinhaber: Voith Turbo GmbH & Co. KG, 89522 Heidenheim (DE)
(72) Erfinder: Mühlberger, Uwe, 89522 Heidenheim (DE)
(74) Vertreter: Dr. Weitzel & Partner

(56) Entgegenhaltungen:
- EP-A- 0 906 842
- DE-A- 2 730 963
- DE-A- 19 527 951
- FR-A- 1 453 106

## Beschreibung

Die Erfindung betrifft eine Radantriebsvorrichtung, insbesondere einen Einzelradantrieb, im einzelnen mit den Merkmalen aus dem Oberbegriff des Anspruchs 1.

Radantriebsvorrichtungen, insbesondere Einzelradantriebe, sind aus einer Vielzahl von Druckschriften bekannt, beispielsweise DE 195 27 951 A1. Diese offenbart einen Antrieb über die Radnabe mittels einer Antriebsmaschine in Form eines Elektromotors, insbesondere einer Transversalflußmaschine, welche achsversetzt zur Radnabenachse im wesentlichen in einem Bereich außerhalb der Felge angeordnet ist und deren Abtriebswelle mittels eines Ritzels mit einem innenverzahnten Hohlrad kämmt. Das Ritzel ist zu diesem Zweck drehfest mit der Abtriebswelle der Antriebsmaschine koppelbar, während das Hohlrad wenigstens mittelbar drehfest mit der Radachse bzw. der Radnabenachse verbindbar ist. Vorzugsweise sind dabei sowohl das Ritzel mit der Abtriebswelle und das Hohlrad mit der Rad- bzw. Radnabenachse drehfest verbunden. Die Drehmomentenübertragung von der Radachse zur Radnabe erfolgt über wenigstens eine Planetenradstufe. Diese Lösung ermöglicht den Einsatz von elektrischen Antriebsmaschinen mit hoher Leistungsdichte zum Radnabenantrieb, und damit der Übertragung hoher Drehmomente auf die Radnabe. Problematisch bei einer derartigen Lösung ist jedoch die Verwendung einer herkömmlichen Scheibenbremseinrichtung, da deren Betätigungselemente schwerer zugänglich sind und des weiteren diese auch die Anordnung und/oder Abmessungen der Transversalflußmaschine bzw. der Drehmomenten-/Drehzahlübertragenden Bauelemente bestimmt. Des weiteren sind zur Realisierung der Drehmomentenübertragung eine Vielzahl von Getriebeelementen vorzusehen, da wenigstens ein Vorgelege und eine Drehzahl-Drehmomentwandlungseinrichtung erforderlich sind.

Eine Ausführung eines gattungsgemäßen Einzelradantriebes ist aus der Druckschrift DE 197 43 906 A1 bekannt. Diese offenbart eine Radantriebsvorrichtung mit einer elektrischen Antriebsmaschine, umfassend wenigstens einen Rotor und einen Stator. Der Rotor steht dabei mit der Radnabe wenigstens mittelbar in Triebverbindung. Die elektrische Antriebsmaschine ist wenigstens teilweise innerhalb eines Bereiches, welcher durch die axiale Erstreckung der Radfelge beschrieben wird, angeordnet. Die Radnabe stützt sich dabei über eine Radlagerung, umfassend eine innere Lagereinheit und eine äußere Lagereinheit wenigstens mittelbar auf der Radachse ab. Der Rotor ist in axialer Richtung betrachtet zwischen der inneren Lagereinheit und der äußeren Lagereinheit zur Abstützung der Radnabe auf der Radachse angeordnet. Der elektrischen Antriebsmaschine ist in Leistungsübertragungsrichtung eine Drehmoment/Drehmomentwandlungseinrichtung nachgeschaltet, welche wenigstens mittelbar mit der Radnabe koppelbar ist. Bei dieser Anordnung des Rotors und die Übernahme der Funktion der Radachse durch das statortragende Element, besteht die Möglichkeit bei Verwendung eines Super-Single-Reifen, die Antriebsmaschine vollständig im Rad zu integrieren. Dem Rad ist des weiteren eine Bremseinrichtung zugeordnet, welche jedoch durch die integrierte Anordnung der Antriebsmaschine außerhalb der Felge angeordnet ist, da der Platz innerhalb der Felge für die Bremseinrichtung nicht mehr zur Verfügung steht. Dieser sind Betätigungseinrichtungen zugeordnet, im allgemeinen in Form von Betätigungszylindern. Die Anordnung des Betätigungszylinders erfolgt dabei neben dem Rad und erstreckt sich weit in Richtung der Fahrzeugmittenachse. Der durch die Wahl des Super-Single-Reifens erzielbare Vorteil einer größeren Gangbreite wird durch die Integration der elektrischen Antriebsmaschine, insbesondere Transversalflußmaschine innerhalb der Felge und der dadurch bedingten Anordnung der gesamten Bremseinrichtung außerhalb der Felge wieder zunichte gemacht.

Der Erfindung liegt daher die Aufgabe zugrunde, eine Radantriebsvorrichtung gemäß dem Oberbegriff des Anspruchs 1 derart weiterzuentwickeln, daß eine möglichst kompakte Antriebseinheit mit hoher Leistungsdichte zur Integration in Einzelreifen geschaffen wird, welche den Einsatz herkömmlicher bzw. standardmäßiger Scheibenbremseinrichtungen ohne wesentliche zusätzliche Modifikationen ermöglichen und gleichzeitig auch deren Betätigung bzw. Funktion nicht beeinträchtigen. Des weiteren soll die Antriebseinheit möglichst wenig Bauraum erfordern.

Die erfindungsgemäße Lösung der Aufgabe ist durch die Merkmale des Anspruchs 1 charakterisiert. Vorteilhafte Ausgestaltungen sind in den Unteransprüchen wiedergegeben.

Die Radantriebsvorrichtung zum Antrieb eines Rades, umfassend eine Felge, einen mit der Felge gekoppelten Radkörper sowie eine Radnabe, welche sich auf einer Radachse abstützt, weist wenigstens eine elektrische Antriebsmaschine auf, die vorzugsweise in Form einer Transversalflußmaschine aufgeführt ist und wenigstens einen Stator und einen Rotor umfaßt. Der Rotor steht dabei wenigstens mittelbar mit der Radnabe in Triebverbindung. Die elektrische Antriebsmaschine ist dabei in der Felge integriert, so daß diese nicht oder kaum in axialer Richtung über diese hinaussteht. Dem Rad ist eine Bremseinrichtung zugeordnet. Diese ist vorzugsweise als Scheibenbremse ausgeführt. Die Bremsscheibe ist dabei mit der Radnabe verbunden, während der Bremssattel in axialer Richtung in unmittelbar räumlicher Nähe zum Rad angeordnet ist. Erfindungsgemäß erfolgt die Anordnung der Betätigungselemente für die Bremseinrichtung in Einbaulage des Radantriebes betrachtet oberhalb des Bremssattels, wobei der mit dem Bremsattel gekoppelte Betätigungshebel in Richtung zum Rad ausgerichtet ist, d.h. von der Fahrzeugmittenachse weggerichtet ist.

Die Funktion der Radachse wird dabei vorzugsweise vom Stator bzw. dem statortragenden Bauelement, d.h. dem Bauelement, an welchem die Statorelemente angeordnet und befestigt sind, übernommen. Das heißt, daß das gesamte Rad sich auf dem statortragenden Bauelement bzw. dem Stator abstützt.

Die erfindungsgemäße Lösung ermöglicht es, einen Einzelradantrieb mit integrierter elektrischer Maschine im anzutreibenden Rad in einem Einzelreifen größerer Breite, das heißt einen sogenannten Super-Single-Reifen unter Ausbildung des statortragenden Bauelementes als Radachse zu integrieren und die dem Rad zugeordnete Bremseinrichtung in Form einer Scheibenbremse, wobei die Scheibe mit der Radnabe verbunden ist und außerhalb der axialen Erstreckung des Reifens angeordnet ist, mit minimalem Bauraumbedarf dem Rad zuzuordnen, um damit im Fahrzeug eine größere Gangbreite zwischen den einzelnen Radkästen zu schaffen, wobei diese nicht durch zusätzliche Einbauten wieder zunichte gemacht wird.

Im einfachsten Fall kann der Durchtrieb vom Rotor direkt auf die Radnabe, beispielsweise durch Realisierung einer drehfesten Verbindung zwischen beiden, erfolgen. Vorzugsweise ist jedoch in Kraftflußrichtung eine Drehzahl/Drehmomentenwandlungseinrichtung, vorzugsweise eine mechanische Drehzahl-/Drehmomentenwandlungseinrichtung, nachgeschaltet. Die Leistungsübertragung erfolgt dann vom Rotor der elektrischen Antriebsmaschine über die mechanische Drehzahl/Drehmomentenwandlungseinrichtung auf die Radnabe. Die Aufgabe der Drehzahl-/Drehmomentenwandlungseinrichtung besteht im wesentlichen in einer Übersetzung ins Langsame vom Rotor zur Radnabe. Vorzugsweise ist die mechanische Drehzahl-/Drehmomentenwandlungseinrichtung derart ausgebildet, daß diese wenigstens einen Planetenradsatz umfaßt. Dabei bildet ein Getriebeelement des Planetenradsatzes den Eingang des mechanischen Drehzahl-/Drehmomentenwandlers und ein weiteres zweites Getriebeelement den Ausgang, welcher wenigstens mittelbar mit der Radnabe koppelbar ist. Vorzugsweise wird zur Erfüllung der Funktionen das erste Getriebeelement vom Sonnenrad des Planetenradsatzes gebildet, welches beispielsweise über eine Hohlwelle mit dem Rotor der elektrischen Antriebsmaschine in Triebverbindung steht. Den Abtrieb des Planetenradsatzes bildet vorzugsweise der Steg, welcher drehfest mit einer Antriebswelle, welche gleichzeitig die Verbindungswelle zur Radnabe ist, koppelbar ist. Denkbar ist theoretisch auch die Verwendung von Stirnradsätzen, bevorzugt werden jedoch Planetenradsätze.

Das statortragende Bauelement bildet im Einbauzustand mit dem Stator eine bauliche Einheit. Vorzugsweise sind das statortragende Bauelement und die einzelnen Statorelemente als einzelne Bauelemente ausgeführt, welche miteinander lösbar verbindbar sind. Der in radialer Richtung betrachtete Außenumfang des statortragenden Bauelementes bildet wenigstens eine Anlagefläche für die innere bzw. die äußere Lageranordnung, über welche sich das Rad auf dem als Radachse fungierenden statortragenden Bauelement abstützt. Vorzugsweise ist zur Schaffung einer möglichst kompakten abgeschlossenen Baueinheit das statortragende Element derart ausgebildet, daß dieses die elektrische Antriebsmaschine und den mechanischen Drehzahl-/Drehmomentenwandler in Umfangsrichtung im wesentlichen umschließt, d.h. sozusagen ein Gehäuse bildet. Aus rein konstruktiven Gründen ist das statortragende Bauelement vorzugsweise mehrteilig ausgeführt und umfaßt wenigstens zwei Bauelemente, welche miteinander in oben beschriebener Weise lösbar verbindbar sind. In Analogie gilt dies auch für die Radnabe, welche ebenfalls wenigstens zwei Bauelemente umfaßt, wobei beide Bauelemente lösbar mit dem Radkörper, welcher vorzugsweise als Radscheibe ausgeführt wird, verbindbar sind. Die Radnabe ist dabei derart ausgebildet, daß diese ebenfalls vorzugsweise im wesentlichen über den gesamten Umfangsbereich die Radachse bzw. die elekrische Antriebsmaschine und die mechanische Drehzahl/Drehmomentenwandlungseinrichtung umschließt.

Die elektrische Antriebsmaschine ist vorzugsweise als Transversalflußmaschine, d.h. als Wechselstrommaschine, welche auf dem Grundprinzip der Wanderfelderzeugung basiert, ausgebildet und, kann vielgestaltig ausgeführt sein. Vorzugsweise weist diese jedoch einen im wesentlichen symmetrischen Aufbau auf. Die Transversalflußmaschine kann dabei entsprechend den Ausführungen, beschrieben in den folgenden Druckschriften:
3. DE 35 36 538 A1
4. DE 37 05 089 C1
5. DE 39 04 516 C1
6. DE 41 25 779 C1
ausgebildet werden. Der Offenbarungsgehalt bezüglich der Ausgestaltung und Arbeitsweise von elektrischen Maschinen, insbesondere Wechselstrommaschinen entsprechend den genannten Druckschriften 3 bis 6, wird hiermit voll umfänglich in den Offenbarungsgehalt der vorliegenden Anmeldung mit einbezogen. Die in diesen Druckschriften beschriebenen elektrischen Antriebsmaschinen umfassen wenigstens einen Stator mit wenigstens einer Ankerwicklung und einen der Ankerwicklung gegenüberliegenden Rotor. Der Rotor besteht dabei aus wenigstens zwei nebeneinander angeordneten, durch eine Zwischenlage aus magnetisch und elektrisch nicht leitendendem Material getrennten Ringelementen, die in Umfangsrichtung eine Vielzahl von wechselweise angeordneten polarisierten Magneten und Weicheisenelementen aufweisen. Eine derartige Anordnung zweier Ringelemente bildet eine Polstruktur. Bei einer symmetrisch gestalteten Transversalflußmaschine ist jeweils eine Polstruktur zu beiden Seiten an einer zentralen Trägerscheibe angeordnet. Vorzugsweise ist der Stator derart ausgebildet, daß dieser einen Außen- und einen Innenstator umfaßt, d.h. daß der Rotor in radialer Richtung betrachtet zwischen dem Außenstator und dem Innenstator rotiert. Denkbar ist jedoch auch der Einsatz von Ausführungen mit nur einem Innenstator oder einem Außenstator.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung anhand einer Ansicht von oben den Grundaufbau eines Grundprinzip einer erfindungsgemäß gestalteten Antriebsvorrichtung;
- Figur 2: verdeutlicht anhand einer Schnittdarstellung detailliert beispielhaft eine bevorzugte Ausführung einer erfindungsgemäß gestalteten Antriebsvorrichtung.

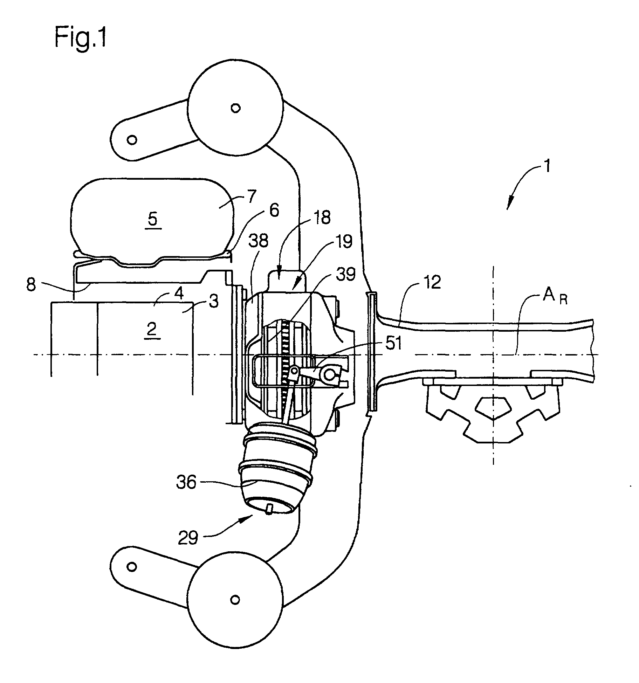

Die Figur 1 verdeutlicht anhand einer Ansicht von oben auf eine Radachse 12 in stark vereinfachter Darstellung den Aufbau und das Grundprinzip einer erfindungsgemäß ausgeführten Radantriebsvorrichtung 1. Diese umfaßt eine elektrische Antriebsmaschine 2, mit wenigstens einem Rotor 3 und einem Stator 4. Die elektrische Antriebsmaschine 2 ist dabei vorzugsweise als Transversalflußmaschine ausgeführt, das heißt als eine auf dem Grundprinzip der Wanderfelderzeugung basierende elektrische Maschine. Zur Realisierung des Einzelradantriebes ist die elektrische Antriebsmaschine 2 einem Rad 5 zugeordnet. Dieses weist eine Felge 6, einen Radkörper 7 sowie eine Radnabe 8 auf. Die Felge 6 ist dabei über den Radkörper 7 mit der Radnabe 8 verbunden. Bei dem Rad 5 handelt es sich dabei um einen Reifen mit größerer Breite, im einzelnen einen sogenannten Super-Single-Reifen. Die elektrische Antriebsmaschine 2 ist dabei fast vollständig in axialer Richtung im Rad 5 integriert. Die Antriebsvorrichtung umfaßt des weiteren eine Bremseinrichtung 18, welche vorzugsweise in Form einer Scheibenbremseinrichtung 19 ausgeführt ist. Diese umfaßt einen Bremssattel 38, welcher mit wenigstens einem scheibenförmigen Element 39 reibschlüssig in Wirkverbindung treten kann. Das scheibenförmige Element, insbesondere die Scheibe 39 ist dabei mit der Radnabe 8 verbunden. Die Bremseinrichtung 18 umfaßt des weiteren eine Betätigungseinrichtung 29, umfassend wenigstens ein Betätigungselement 36 in Form eines Zylinders, vorzugsweise eines sogenannten Tristop-Zylinders, dessen Kolben 50 an einem Betätigungshebel 51 wirksam wird. Der Betätigungshebel 51 dient dabei zur Übertragung der Anpreßkraft vom Bremssattel 38 auf die Scheibe 39. Der Betätigungshebel 51 ist dabei in Richtung zum Rad 5 gerichtet. Das Betätigungselement 36 in Form des Tristop-Zylinders ist erfindungsgemäß oberhalb des Bremssattels 38 angeordnet und in einer Ansicht von oben quer zur Radachse 12 bzw. der Fahrtrichtung, das heißt im wesentlichen parallel oder in einem Winkel zum Rad 5. Dies gilt auch für den Kolben 50, welcher am Betätigungshebel 51 angreift. Bezogen auf die axiale Erstreckung der Bremseinrichtung 18 zwischen Rad 5 und Mittenachse des Fahrzeuges, welche in Fahrtrichtung ausgerichtet ist oder dem anderen, auf der gleichen Radachse 12 gelagerten gegenüberliegenden Rades erfolgt die Anordnung der Betätigungseinrichtung 29 im wesentlichen im Bereich der axialen Erstreckung des Bremssattels 38. Bei dem Tristop-Zylinder handelt es sich um einen kombinierten Federspeicher-Membranzylinder. Diese haben in der Regel die Aufgabe, die erforderlichen Bremskräfte für die voneinander unabhängigen Bremsanlagen - Betriebs- oder Festellbremsanlage - zu erzeugen und werden daher bei gestängellosen Hilfs- und Feststell-Bremsanlagen verwendet. Durch den vorgebauten Membranzylinder kann die Betriebs-Bremsanlage unabhängig von der Hilfs- und Feststell-Bremsanlage betätigt werden. Die Grundausführungen unterscheiden sich in ihrer Größe und dem Aufbau, insbesondere den Anschlußmöglichkeiten für die einzelnen Bremsabnlagen und die Art der Übertragung. Einige Baureihen verfügen über einen Überhub im Federspeicherteil. In der Lesestellung ist ein Anschluß des Tristop-Zylinders, insbesondere des Federspeichers des Tristop-Zylinders voll belüftet. Dadurch ist der mit der Druckluft beaufschlagte Kolben 50 in der Lage, die Feder vorzuspannen und damit den Federspeicher zu lösen. Gleichzeitig ist der gegenüberliegende Anschluß des Membranzylinders entlüftet und die Betriebsbremse gelöst. Wird dieser Anschluß jedoch belüftet erfolgt die Betätigung der Betriebs-Bremsanlage. Die Membrane überwindet die Gegenkraft der Feder. Wird die Betriebsbremse wieder gelöst, fällt der Druck in diesem Anschluß wieder derart ab, so daß die Rückstellkräfte der Radbremse in Verbindung mit der Kraft der Feder die Membran in ihrer Ausgangsstellung zurückführen. Die Betätigung der Hilfs- oder Feststell-Bremsanlage erfolgt durch Betätigung des Handbremsventils.

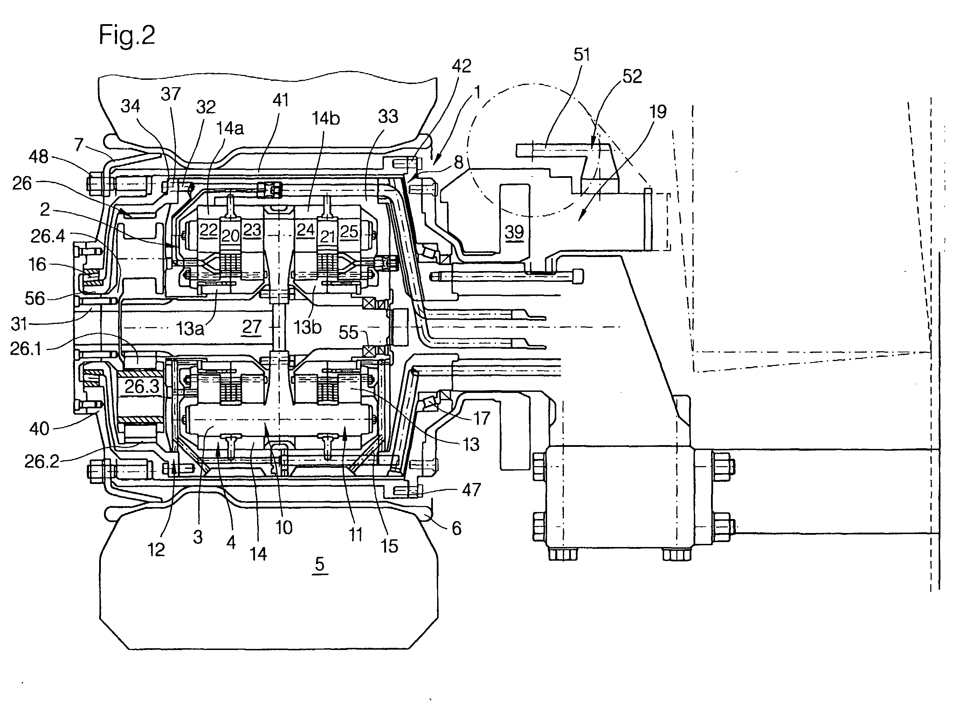

Die Figur 2 verdeutlicht in detaillierter Ausführung anhand eines Axialschnitts eine bevorzugte Ausführung eines Radantriebes. Der dem Rotor 3 zugeordnete Stator 4 umfaßt jeweils einen Innenstator 13 und einen Außenstator 14.

Der Innenstator 13 umfaßt in diesem Fall ebenfalls zwei Statorelemente, ein erstes Innenstatorelement 13a und ein zweites Statorinnenelement 13b, die jeweils den einzelnen Polstrukturen 10 bzw. 11 zugeordnet sind. In Analogie ist der Außenstator 14 in zwei Außenstatorelemente 14a, 14b unterteilt, die ebenfalls den einzelnen Polstrukturen 10 bzw. 11 zugeordnet sind. Zur Realisierung der Funktionsweise ist es erforderlich, daß der Stator 4 wenigstens einen Außenstator 14 umfaßt. Die einzelnen Statorelemente, die Innenstatorelemente 13a, 13b und die Außenstatorelemente 14a und 14b umfassen vorzugsweise eine Vielzahl von in Umfangsrichtung hintereinander in bestimmten Abständen zueinander angeordneten Schnittbandkernen. Vorzugsweise sind diese Schnittbandkerne aus hintereinander angeordneten Blechelementen ausgeführt.

Der Rotor 3 der elektrischen Maschine 2, insbesondere der Transversalflußmaschine, steht wenigstens mittelbar mit der Radnabe 8 in Triebverbindung. Die Radnabe 8 wiederum ist mit dem Radkörper 7 drehfest verbunden und damit mit der Felge 6. Erfindungsgemäß ist vorgesehen, daß das den Stator 4 tragende Element, hier mit 15 bezeichnet, als Radachse 12 ausgeführt ist. Die einzelnen Statorelemente, insbesondere die Außenstatorelemente 14a und 14b, können dabei mit dem statortragenden Element 15 eine bauliche Einheit dahingehend bilden, daß diese als ein Bauteil ausgeführt sind. Es ist jedoch auch denkbar, die bauliche Einheit durch Kopplung der einzelnen Statorelemente, insbesondere der Außenstatorelemente 14a bzw. 14b, mit dem statortragenden Element 15 zu realisieren.

Die Abstützung des Rades 5 über den Radkörper 7 und die Radnabe 8 erfolgt mittels entsprechender Lageranordnungen, hier einer ersten äußeren Lageranordnung 16 und einer zweiten inneren Lageranordnung 17. Über diese Lageranordnungen 16 bzw. 17 stützt sich die Radnabe 8 auf der Radachse A_{R} in Form des statortragenden Bauelementes 15 ab. Erfindungsgemäß ist dazu weiter vorgesehen, daß wenigstens der Rotor 3 der elektrischen Antriebsmaschine 2 in axialer Richtung zwischen der äußeren Lageranordnung 16 und der inneren Lageranordnung 17 angeordnet ist.

Bei Inbetriebnahme der elektrischen Antriebsmaschine 2, insbesondere der Transversalflußmaschine, wird die elektrische Leistung in mechanische umgewandelt und über den Rotor 3, welcher mit der Radnabe 8 in Triebverbindung steht, vorzugsweise drehfest mit dieser gekoppelt ist, auf das Rad übertragen. Die erfindungsgemäße Lösung ermöglicht eine sehr kompakte Gestaltung der Radantriebsvorrichtung 1, insbesondere eines Einzelradantriebes, welcher nahezu vollständig in axialer Richtung betrachtet in einem Bereich angeordnet ist, welcher durch die axiale Erstreckung der Felge des Rades 5 beschrieben wird. Diese Anordnung ermöglicht es, die Zugängigkeit zu den verwendeten Radbremsen und deren Funktionstätigkeit zu gewährleisten, wobei die Radbremsen vorzugsweise als Scheibenbremseinrichtung 19 ausgebildet sind. Die Scheibenbremseinrichtung 19 schließt sich in axialer Richtung an die Radantriebsvorrichtung 1 an, wobei die Scheibenbremseinrichtung 19 außerhalb der Radlagerung 17,16 bzw. in einem axialen Bereich, bezogen auf die axiale Erstreckung des Fahrzeuges, welcher durch die Anordnung der inneren Lagerung 17 und der Fahrzeugmittelachse beschrieben wird, angeordnet ist.

Die Figur 1 verdeutlicht in lediglich stark vereinfachter und schematisierter Darstellung den Grundaufbau der erfindungsgemäß gestalteten Antriebsvorrichtung 1. In der Figur 2 ist eine vorzugsweise verwendete Ausgestaltung der erfindungsgemäßen Ausführung dargestellt. Der Grundaufbau und das Grundprinzip entsprechen im wesentlichen den in der Figur 1 beschriebenen. Für gleiche Elemente werden daher die gleichen Bezugszeichen verwendet.

Die Radantriebsvorrichtung 1 umfaßt auch hier eine elektrische Maschine 2 welche vorzugsweise in Form einer Transversalflußmaschine ausgeführt ist. Die elektrische Maschine 2 umfaßt einen Rotor 3 und einen Stator 4 Die elektrische Maschine 2, welche als Wechselstrommaschine, die nach dem Transversalflußprinzip arbeitet, ausgeführt ist, kann verschiedenartig gestaltet sein. Denkbar sind beispielsweise Ausführungen, wie aus den Druckschriften
1. DE 35 36 538 A1
2. DE 37 05 089 C1
3. DE 39 04 516 C1
4. DE 41 25 779 C1
bekannt. Der Offenbarungsgehalt dieser Druckschriften wird hiermit voll umfänglich bezüglich der Gestaltung einer Transversalflußmaschine in den Offenbarungsgehalt der Anmeldung mit einbezogen. Vorzugsweise weist die elektrische Antriebsmaschine 2, insbesondere die Transversalflußmaschine, einen im wesentlichen symmetrischen Aufbau auf. Der Rotor 3 wird dabei von einer Trägerscheibe 9 und beidseitig sich von der zentralen Trägerscheibe 9 in axialer Richtung erstreckenden Polstrukturen 10 und 11 gebildet. Jede Polstruktur 10 bzw. 11 besteht dabei aus wenigstens zwei nebeneinander angeordneten, durch eine Zwischenlage aus magnetisch und elektrisch nicht leitendem Material 20 bzw. 21 getrennten Ringelementen 22 bzw. 23 für die Polstruktur 10 und 24 bzw. 25 für die Polstruktur 11. Die Ringelemente weisen dazu in Umfangsrichtung eine Vielzahl von wechselweise angeordneten polarisierten Magneten 23a bzw. 22a und 24a bzw. 25a und Weicheisenelementen 23b, 22b, 24b und 25b auf. Denkbar ist jedoch eine Ausführung mit nur einer an einer zentralen Trägerscheibe 9 angeordneten Polstruktur 10. Der dem Rotor 3 zugeordnete Stator 4 umfaßt dann wenigstens einen Außenstator 14 oder einen Innenstator 13. Vorzugsweise sind ein weiterer Innenstator 13, welcher sich in radialer Richtung bis zu einem Durchmesser d erstreckt, welcher kleiner ist als der Innendurchmesser d, des Rotors 3 bzw. ein weiterer Außenstator 14 vorgesehen. Im dargestellten Fall sind sowohl ein Außenstator 14 und ein Innenstator 13 vorgesehen. Dies entspricht ebenfalls einer bevorzugten Ausführung. Theoretisch ist es jedoch auch denkbar, daß lediglich nur ein Innen- oder ein Außenstator vorgesehen wird. Der Stator 4 ist mit einem statortragenden Element 15 derart verbunden, daß diese im Einbauzustand eine bauliche Einheit bilden. Das statortragende Element 15 ist dazu wenigstens über einen Teilbereich der Statorfläche insbesondere der Statoraußenfläche mit diesem verbunden. Es besteht dabei theoretisch auch die hier nicht dargestellte Möglichkeit, den Stator 4 und das statortragende Element 15 aus einem Bauteil herzustellen. Das statortragende Element 15 bzw. der mit diesem gekoppelte Stator 4 übernimmt die Funktion der Radachse 12, d.h. die Abstützung der Momente. Auf diesem stützt sich das Rad 5, die Felge 6 über den Radkörper 7, welcher im dargestellten Fall als Radscheibe ausgeführt ist, und die Radnabe 8 ab. Vorzugsweise ist zur Untersetzung bzw. zur Übersetzung ins Langsame der elektrischen Antriebsmaschine 2 eine Drehzahl-/Drehmomentenwandlungseinrichtung in Leistungsübertragungsrichtung nachgeschaltet. Die Kopplung bzw. Realisierung der Triebverbindung zwischen dem Rotor 3 der elektrischen Antriebsmaschine 2 und der Radnabe 8 erfolgt über die mechanische Drehzahl-/Drehmomentenwandlungseinrichtung 26. Zu diesem Zweck ist der Rotor 3 der elektrischen Antriebsmaschine 2 drehfest mit einer Hohlwelle 27 gekoppelt, welche sich über ein Lager, vorzugsweise ein Nadellager 28, auf der Radnabe 8 abstützt und dem Eingang der mechanischen Drehzahl/Drehmomentenwandlungseinrichtung 26 gekoppelt ist. Die mechanische Drehzahl-/Drehmomentenwandlungseinrichtung 26 umfaßt vorzugsweise wenigstens einen Planetenradsatz 30. Dieser weist wenigstens ein Sonnenrad 26.1, ein Hohlrad 26.2, Planetenräder 26.3 und einen Steg 26.4 auf. Das Sonnenrad 26.1 ist dazu vorzugsweise in die Hohlwelle 27 eingearbeitet. Es besteht jedoch auch theoretisch die Möglichkeit, dieses als separates Bauteil drehfest mit der Hohlwelle 27 zu verbinden. Das Hohlrad 26.2 ist am statortragenden Bauteil 15 angeordnet. Vorzugsweise ist dieses in das statortragende Bauteil 15 bzw. bei Bestehen des statortragenden Bauteils 15 aus mehreren miteinander kraft- und/oder formschlüssig verbundenen Bauelementen, in eines von diesen eingearbeitet. Den Ausgang bzw. den Abtrieb des mechanischen Drehzahl-/Drehmomentenwandlers 26 bildet der Steg 26.4. Dieser ist drehfest mit einer sogenannten Antriebswelle 31 verbunden. Die Antriebswelle 31 bildet die Verbindungswelle zwischen dem Ausgang des mechanischen Drehzahl-/Drehmomentenwandlers, hier dem Steg 26.4, und der Radnabe 8. Diese ist ebenfalls drehfest mit der Antriebswelle 31 gekoppelt. Die Abstützung des Rotors 3 der elektrischen Antriebsmaschine 2, des mechanischen Drehzahl-/Drehmomentenwandlers 26 und der Radnabe 8 erfolgt auf dem statortragenden Bauelement 15 über die äußere Lageranordnung 16. Diese ist vorzugsweise als Schrägrollenlager ausgeführt. Die Abstützung des Rades 5 erfolgt des weiteren über die innere Lageranordnung 17 auf dem statortragenden Bauelement 15 bzw. einem mit diesem gekoppelten Bauteil. Aus der Figur 2 ist ersichtlich, daß die Anordnung der elektrischen Antriebsmaschine 2 sowie des mechanischen Drehmomenten-/Drehzahlwandlers 26 zwischen der Radlagerung, d.h. der Lager, über welche sich-das Rad auf der Radachse, als welche hier das statortragende Bauelement 15 fungiert, erfolgt. Im dargestellten Fall ist das statortragende Bauelement 15 aus mehreren Bauelementen, einem ersten Bauelement 32, einem zweiten Bauelement 33 sowie einem dritten Bauelement 34 zusammengefügt. Das erste Bauelement 32 trägt dabei im dargestellten Fall wenigstens jeweils einen Außenstator 14a und einen Innenstator 13a. Das zweite Bauelement 33 bildet die Lagerung bzw. die Verbindung zwischen dem Außenstator 14b und dem Innenstator 13b mit dem statortragenden Element 15. Beide Bauelemente sind vorzugsweise derart ausgeführt, daß diese die elektrische Antriebsmaschine 2 in radialer Richtung im wesentlichen glockenförmig umschlingen. Das dritte Bauelement 34 trägt das Hohlrad 26.2 des mechanischen Drehzahl/Drehmomentenwandlers 26. Aus Montagegründen sind die einzelnen Bauelemente lösbar miteinander verbunden, vorzugsweise mittels Schraubverbindungen 37, welche in Umfangsrichtung auf einem bestimmten Durchmesser dᵥ des statortragenden Bauelementes 15 in bestimmten Abständen zueinander angeordnet sind. Die Radnabe 8 besteht ebenfalls aus einer Mehrzahl von einzelnen Elementen, im einzelnen einem ersten Bauelement 40, einem zweiten Bauelement 41 sowie einem dritten Bauelement 42. Das erste Bauelement 40 der Radnabe 8 bildet dabei den drehfest mit der Antriebswelle 31 gekoppelten Teil der Radnabe 8 sowie die Lagerfläche 43 zur Abstützung bzw. Fixierung der Lageranordnung 16 zur Abstützung der Radnabe 8 auf der Radachse, d.h. dem statortragenden Bauelement 15. Das zweite Bauelement der Radnabe 8, mit 41 bezeichnet, ist mit dem ersten Bauelement lösbar über Schraubverbindungen 44 gekoppelt und bildet in axialer Richtung zum Fahrzeuginneren hin gerichtet einen flanschförmigen Anschlag 45, welcher am Radkörper 7 zum Anliegen kommt.

Das dritte Bauelement 42 weist ebenfalls in radialer Richtung eine flanschartige Verdickung 47 auf, welche ebenfalls wenigstens mittelbar an der Radscheibe bzw. dem Radkörper 7 zum Anliegen kommt. Die Radnabe 8, welche aus wenigstens den drei genannten Elementen 40 bis 42 besteht, ist form- bzw. kraftschlüssig über die Schraubverbindungen 48 mit dem Radkörper 7 verbunden. Die Radnabe 8 bildet somit eine Art glockenförmiges Gehäuse, bestehend aus mehreren Bauteilen, welches in Umfangsrichtung den Achskörper, insbesondere das statortragende Bauelement, im wesentlichen innerhalb der Felge 6 umschließt. Das dritte Bauelement 42 der Radnabe 8 bildet dabei die Anschlagfläche für die Lager der zweiten inneren Lageranordnung 17 hier dem Außenring des Lagers 17. Mit der Radnabe 8 drehfest verbunden ist die Bremsscheibe 39 einer Scheibenbremseinrichtung 19. Diese umfaßt des weiteren entsprechende Betätigungselemente 52. Auch die Bremsscheibe stützt sich damit über die innere Lageranordnung 17 auf dem statortragenden Element 15 ab.

Aufgrund der konstruktiven Ausführung sind weitere Lageranordnungen 55 und 56 erforderlich, wobei die Lageranordnung 55 die Hohlwelle 27 am statortragenden Element 15, insbesondere dem zweiten Bauelement 33 des statortragenden Bauelementes 15, abstützt, während die Lageranordnung 56 den Steg 26.4, bzw. das mit diesem unmittelbar gekoppelte Bauteil am statortragenden Element 15 abstützt. Das statortragende Bauelement 15 ist in der Regel mit dem Achskörper, welcher zwei einander gegenüberliegende Räder miteinander verbindet, befestigt. Der Leistungsfluß, d.h. die an der elektrischen Antriebsmaschine 2 umgewandelte elektrische Leistung in mechanische Leistung erfolgt vom Rotor 3 der elektrischen Antriebsmaschine 4 über den mechanischen Drehzahl-/Drehmomentenwandler 26 auf die Antriebswelle 31 und von da auf die Radnabe 8, welche wiederum mit dem Radkörper 7 und der Felge 6 gekoppelt ist.

Die Verwendung einer elektrischen Antriebsmaschine in Form einer Transversalflußmaschine ermöglicht es, aufgrund von deren hohen Kraftdichte, mit einem einstufigen Planetengetriebe als Drehzahl/Drehmomentenwandler auszukommen, um die geforderte Steigfähigkeit und Endgeschwindigkeit zu erreichen. Aufgrund der geringen geforderten Anzahl an Bauelementen zur Erbringung der erforderlichen Leistung, insbesondere des entsprechenden Verhältnisses von Drehzahl und Drehmoment, wird es möglich, sowohl die elektrische Antriebsmaschine 2 als auch den Drehzahl/Drehmomentenwandler 26 zwischen der Radlagerung, d.h. der inneren Lageranordnung 17 und der äußeren Lageranordnung 16 zur Abstützung des Rades auf der Radachse 12 anzuordnen. Zusätzlich wird der erforderliche Platz für den Einsatz einer serienmäßigen Scheibenbremseinrichtung geschaffen. Die Betätigungselemente der Scheibenbremseinrichtung 51 sind mit einer derartigen Anordnung frei zugänglich und führen zu keiner Begrenzung der Auslegung der elektrischen Antriebsmaschine 2. Die in der Figur 2 vorgeschlagene Lösung ermöglicht somit die Bereitstellung und Übertragung hoher Leistungen sowie der Einsatz einer standardmäßigen Bremseinrichtung in kompakter Bauweise.

Vorzugsweise ist die elektrische Antriebsmaschine 2 frei von einer Abdichtung gegenüber der mechanischen Drehzahl-/Drehmomentenwandlungseinrichtung 26, welche in der Regel mit Schmiermittel versorgt wird. Dadurch wird es möglich, das ohnehin zur Schmierung der mechanischen Drehzahl/Drehmomentenwandlungseinrichtung 26 bzw. der einzelnen Lageranordnungen erforderliche Schmiermittel gleichzeitig zur Kühlung der elektrischen Antriebsmaschine 2 zu nutzen und somit eine einfache Kühlung zu ermöglichen.

### Bezugszeichenliste

- 1: Radantriebsvorrichtung
- 2: Antriebsmaschine
- 3: Rotor
- 4: Stator
- 5: Rad
- 6: Felge
- 7: Radkörper
- 8: Radnabe
- 9: zentrale Trägerscheibe
- 10: Polstruktur
- 11: Polstruktur
- 12: Radachse
- 13: Innenstator
- 14: Außenstator
- 14a, 14b: Außenstatorelement
- 15: statortragendes Element
- 16: äußere Lageranordnung
- 17: innere Lageranordnung
- 18: Bremseinrichtung
- 19: Scheibenbremseinrichtung
- 20: Zwischenlager aus magnetisch und elektrisch nicht leitendem Material
- 21: Zwischenlager aus magnetisch und elektrisch nicht leitfähigem Material
- 22: Ringelement
- 23: Ringelement
- 24: Ringelement
- 25: Ringelement
- 22a: polarisierte Magnete
- 23a: polarisierte Magnete
- 24a: polarisierte Magnete
- 25a: polarisierte Magnete
- 23b: Weicheisenelemente
- 24b: Weicheisenelemente
- 25b: Weicheisenelemente
- 26: mechanische Drehzahl-/Drehmomentwandlungseinrichtung
- 27: Hohlwelle
- 28: Nadellager
- 29: Betätigungseinrichtung
- 30: Planetenradsatz
- 31: Antriebswelle
- 32: erstes Bauelement
- 33: zweites Bauelement
- 34: drittes Bauelement
- 36: Betätigungselement
- 37: Schraubverbindungen
- 38: Bremssattel
- 39: Scheibe
- 40: erstes Bauelement
- 41: zweites Bauelement
- 42: drittes Bauelement
- 42: Lagerfläche
- 43: Schraubenverbindung
- 45: flanschförmiger Anschlag
- 47: flanschartige Verdickung
- 48: Schraubverbindung
- 50: Kolben
- 51: Betätigungshebel
- 55: Lageranordnungen
- 56: Lageranordnungen

## Patentansprüche

1. Radanordnung, insbesondere Einzelradantrieb für ein Rad (5) eines Fahrzeuges, umfassend wenigstens eine Radnabe (8) zur mittelbaren Abstützung auf einer Radachse (12) und eine zur Stützung eines Reifens vorgesehene Radfelge (6);
1.1 mit einer elektrischen Antriebsmaschine (2), umfassend wenigstens einen, mit der Radnabe (8) wenigstens mittelbar in Triebverbindung stehenden Rotor (3) und einen Stator (4);
1.2 die elektrische Antriebsmaschine (2) ist wenigstens teilweise innerhalb eines Bereiches, welcher durch die axiale Erstreckung der Radfelge (6) beschrieben wird, angeordnet;
1.3 mit einer dem Rad (5) zugeordneten Bremseinrichtung (18), umfassend eine Scheibenbremseinrichtung (19) mit einer Scheibe (39), die drehfest mit der Radnabe (8) verbunden ist und einem der Scheibe (39) zugeordneten Bremssattel (38), und eine, am Bremssattel (38) wirksamwerdende Betätigungseinrichtung (29);
1.4 die Bremseinrichtung (29) ist in axialer Richtung in unmittelbarer räumlicher Nähe neben dem Rad (5) angeordnet;
**gekennzeichnet durch** die folgenden Merkmale:
1.5 die Betätigungseinrichtung (29) ist oberhalb des Bremssattels (38) der Bremseinrichtung (18) angeordnet und erstreckt sich in axialer Richtung in Richtung zur Fahrzeugmittenachse betrachtet nicht über die Abmessungen der Bremseinrichtung (18) in dieser Richtung hinaus.

2. Radantriebsvorrichtung nach Anspruch 1, **gekennzeichnet durch** die folgenden Merkmale:
2.1 die Betätigungseinrichtung (29) umfaßt wenigstens ein Betätigungselement (36), welches an einem am Bremssattel (38) angelenkten Betätigungshebel (51) wirksam wird;
2.2 der Betätigungshebel (51) ist parallel oder geneigt zu einer Parallelen zur Achse des Rades (5) ausgeführt und in Richtung zum Rad (5) gerichtet.

3. Radantriebsvorrichtung nach Anspruch 2, **dadurch gekennzeichnet, daß** das Betätigungselement (36) eine Zylinder-Kolbeneinheit umfaßt, wobei der Kolben (50) am Betätigungshebel (51) angelenkt ist.

4. Radantreibsvorrichtung nach Anspruch 3, **dadurch gekennzeichnet, daß** die Zylinder-Kolbeneinheit in vertikaler Richtung betrachtet geneigt ausgeührt ist.

5. Radantreibsvorrichtung nach Anspruch 3, **dadurch gekennzeichnet, daß** der Betätigungshebel (51) in vertikaler Richtung betrachtet geneigt ausgeührt ist.

6. Radantriebsvorrichtung nach einem der Ansprüche 1 bis 5, **dadurch gekennzeichnet, daß** ein den Stator (4) tragendes Bauelement (15) die Radachse (12) bildet.

7. Radantriebsvorrichtung nach Anspruch 6, **dadurch gekennzeichnet, daß** der Stator (4) und das statortragende Element (15) von einem Bauteil gebildet werden.

8. Radantriebsvorrichtung nach Anspruch 6, **dadurch gekennzeichnet, daß** der Stator (4) und das statortragende Element (15) von wenigstens zwei Elementen gebildet werden, welche mittels einer kraft- und/oder formschlüssigen und/oder stoffschüssigen Verbindung im Einbauzustand eine bauliche Einheit bilden.

9. Radantriebsvorrichtung nach einem der Ansprüche 1 bis 8, **dadurch gekennzeichnet, daß** der Rotor (4) in axialer Richtung betrachtet zwischen einer inneren Lagereinheit (17) und einer äußeren Lagereinheit (16) zur Abstützung der Radnabe (8) auf der Radachse (12) angeordnet ist.

10. Radantriebsvorrichtung nach einem der Ansprüche 1 bis 9, **dadurch gekennzeichnet, daß** in Leistungsübertragungsrichtung der elektrischen Antriebsmaschine (2) eine mechanische Drehzahl/Drehmomentenwandlungseinrichtung (26) nachgeschaltet ist, welche wenigstens mittelbar mit der Radnabe (8) koppelbar ist.

11. Radantriebsvorrichtung nach Anspruch 10, **dadurch gekennzeichnet, daß** die Drehzahl-/Drehmomentenwandlungseinrichtung wenigstens einen Planetenradsatz (30) umfaßt.

12. Radantriebsvorrichtung nach Anspruch 11, **dadurch gekennzeichnet, daß** die Kopplung zwischen dem Planetenradsatz (30) und der Radnabe (8) über eine mit der Radnabe (8) drehfest verbundene Antriebswelle (31), welche mit dem Ausgang des Planetenradsatzes (30) gekoppelt ist, realisiert wird.

13. Radantriebsvorrichtung nach einem der Ansprüche 1 bis 12, dadurch gekenzeichnet, daß sich die Bremsscheibe (50) über die innere Lagereinheit (17) auf der Radachse (12) abstützt.

14. Radantriebsvorrichtung nach einem der Ansprüche 1 bis 13, **dadurch gekennzeichnet, daß** die elektrische Antriebsmaschine (2) als Transversalflußmaschine ausgeführt ist.

15. Radantriebsvorrichtung nach Anspruch 14, **gekennzeichnet durch** die folgenden Merkmale:
15.1 der Rotor (3) umfaßt eine Trägerscheibe (9) und wenigstens eine sich in axialer Richtung von der Trägerscheibe weg erstreckende und an dieser angeordnete Polstruktur (10,11);
15.2 jede Polstruktur (10,11) umfaßt zwei nebeneinanderliegende, **durch** eine Zwischenlage (20, 21) aus magnetisch und elektrisch nicht leitendem Material (Zwischenring) getrennte Reihen (22, 23, 24, 25) aus in Umfangsrichtung wechselweise magnetisierten Magneten (22a, 23a, 24a, 25a) mit dazwischenliegenden Weicheisenelementen (22b, 23b, 24b, 25b).

16. Radantriebsvorrichtung nach Anspruch 15, **dadurch gekennzeichnet, daß** die Trägerscheibe (9) zwei an beiden Seiten sich in axialer Richtung von der Trägerscheibe (9) weg erstreckende und an dieser angeordnete Polstrukturen (10,11) umfaßt.

17. Radantriebsvorrichtung nach einem der Ansprüche 14 bis 16, **dadurch gekennzeichnet, daß** der Stator (4) wenigstens einen Außenstator (14a, 14b) umfaßt, welcher in radialer Richtung betrachtet auf einem Durchmesser angeordnet ist, welcher größer als der Durchmesser des Außenumfanges des Rotors (3) ist.

18. Radantriebsvorrichtung nach einem der Ansprüche 14 bis 17, **dadurch gekennzeichnet, daß** der Stator (4) einen Innenstator (13b, 14b) umfaßt.

19. Radantriebsvorrichtung nach einem der Ansprüche 14 bis 18, **dadurch gekennzeichnet, daß** der Rotor (3) und/oder der Stator (4) oder das statortragende Element (15) in radialer Richtung wenigstens jeweils einen äußeren Zwischenraum (62) bilden;
es sind Mittel (60) zur Kopplung der Schmiermittelzufuhr zur mechanischen Drehzahl-/Drehmomentenwandlungseinrichtung (26) mit den Zwischenräumen (62) vorgesehen.

20. Radantriebsvorrichtung nach Anspruch 19, **dadurch gekennzeichnet, daß** die Mittel zur Kopplung und wenigstens mittelbaren Befüllung eines Teilbereiches der Zwischenräume (62) zwischen Rotor (3) und Stator (4) oder Rotor (3) und statortragendem Element (15) wenigstens einen, im statortragenden Element (15) vorgesehenen und wenigstens indirekt mit der Schmiermittelversorgungseinrichtung koppelbaren Kanal umfassen.

## Claims

1. A wheel arrangement, especially a single-wheel drive for a wheel (5) of a vehicle, comprising at least one wheel hub (8) for the indirect support on a wheel axle (12) and a wheel rim (6) provided for the support of a tyre;
1.1 with an electric driving motor (2), comprising at least one rotor (3) and a stator (4) being at least indirectly in a driving connection with the wheel hub (8);
1.2 with the electric driving motor (2) being arranged at least partly within a region which is described by the axial extension of the wheel hub (6);
1.3 with a braking device (18) which is associated with the wheel (5) and comprises a disk brake device (19) with a disk (39) which is connected with the wheel hub (8) in a torsionally rigid fashion and a calliper (38) associated with the disk and an actuating device (29) which becomes active on the calliper (38);
1.4 with the braking device (18) being arranged in the axial direction in the ultimate vicinity adjacent to the wheel (5),
**characterized by** the following features:
1.5 the actuating device (29) is arranged above the calliper (38) of the braking device (18) and extends in the axial direction, when seen in the direction towards the central axis of the vehicle, not beyond the dimensions of the braking device (18) in this direction.

2. A wheel drive apparatus as claimed in claim 1, **characterized by** the following features:
2.1 the actuating device (29) comprises at least one actuating element (36) which becomes effective on an actuating lever (51) linked to the calliper (38);
2.2 the actuating lever (51) is configured to be parallel or inclined relative to a parallel line to the axis of the wheel (5) and aims in the direction towards the wheel (5).

3. A wheel drive apparatus as claimed in claim 2, **characterized in that** the actuating element (36) comprises a cylinder-piston unit, with the piston (50) being linked to the actuating lever (51).

4. A wheel drive apparatus as claimed in claim 3, **characterized in that** the cylinder-piston unit is provided with an inclined configuration when viewed in the vertical direction.

5. A wheel drive apparatus as claimed in claim 3, **characterized in that** the actuating lever (51) is provided with an inclined configuration when viewed in the vertical direction.

6. A wheel drive apparatus as claimed in one of the claims 1 to 5, **characterized in that** a component (15) carrying the stator (4) forms the wheel axle (12).

7. A wheel drive apparatus as claimed in claim 6, **characterized in that** the stator (4) and the stator-carrying element (15) are formed by one component.

8. A wheel drive apparatus as claimed in claim 6, **characterized in that** the stator (4) and the stator-carrying element (15) are formed by at least two elements which form a modular unit by means of non-positive and/or positive and/or integral connection in the installed state.

9. A wheel drive apparatus as claimed in one of the claims 1 to 8, **characterized in that** the rotor (4), when seen in the axial direction, is arranged between an inner bearing unit (17) and an outer bearing unit (16) for supporting the wheel hub (8) on the wheel axle (12).

10. A wheel drive apparatus as claimed in one of the claims 1 to 9, **characterized in that** in the direction of the power transmission of the electric drive motor (2) a mechanical speed-torque conversion device (26) is connected downstream which can be coupled at least indirectly with the wheel hub (8).

11. A wheel drive apparatus as claimed in claim 10, **characterized in that** the speed-torque conversion device comprises at least one planet wheel set (30).

12. A wheel drive apparatus as claimed in claim 11, **characterized in that** the coupling between the planet wheel set (30) and the wheel hub (8) is realized through a drive shaft (31) which is torsionally rigidly connected with the wheel hub (8) and which is coupled with the output of the planet wheel set (30).

13. A wheel drive apparatus as claimed in one of the claims 1 to 12, **characterized in that** the brake disk (50) rests on the wheel axle (12) through the inner bearing unit (17).

14. A wheel drive apparatus as claimed in one of the claims 1 to 13, **characterized in that** the electric drive motor (2) is configured as a transverse flux motor.

15. A wheel drive apparatus as claimed in claim 14, **characterized by** the following features:
15.1 the rotor (3) comprises a carrier disk (9) and at least one pole structure (10, 11) extending away from the carrier disk in the axial direction and arranged on the same;
15.2 each pole structure (10, 11) comprises two adjacent rows (22, 23, 24, 25) which are separated from each other by an intermediate layer (20, 21) made of magnetically and electrically non-conductive material (intermediate ring) and which are made of magnets (22a, 23a, 24a, 25a) which are magnetized alternatingly in the circumferential direction and comprise interposed soft-iron elements (22b, 23b, 24b, 25b).

16. A wheel drive apparatus as claimed in claim 15, **characterized in that** the carrier disk (9) comprises two pole structures (10, 11) which extend at both sides in the axial direction away from the carrier disk (9) and are arranged on the same.

17. A wheel drive apparatus as claimed in one of the claims 14 to 16, **characterized in that** the stator (4) comprises at least one external stator (14a, 14b) which, when seen in the radial direction, is arranged on a diameter which is larger than the diameter of the outer circumference of the rotor (3).

18. A wheel drive apparatus as claimed in one of the claims 14 to 17, **characterized in that** the stator (4) comprises an inner stator (13b, 14b).

19. A wheel drive apparatus as claimed in one of the claims 14 to 18, **characterized in that** the rotor (3) and/or the stator (4) or the stator-carrying element (15) form at least one outer intermediate space (62) each in the radial direction;
there are means (60) for coupling the lubricant supply to the mechanical torque-speed conversion device (26) with the intermediate spaces (62).

20. A wheel drive apparatus as claimed in claim 19, **characterized in that** the means for coupling and at least indirect filling of a partial region of the intermediate spaces (62) between rotor (3) and stator (4) or rotor (3) and stator-bearing element (15) comprise at least one conduit which is provided in the stator-bearing element (15) and can be coupled at least indirectly with the lubricant supply device.

## Revendications

1. Disposition de roue, en particulier entraînement d'une seule roue pour une roue (5) d'un véhicule, comprenant au moins un moyeu de roue (8) destiné à s'appuyer indirectement sur un essieu de roue (12) et une jante de roue (6) destinée à soutenir un pneumatique ;
1.1 avec une machine d'entraînement électrique (2) comprenant au moins un rotor (3) qui se trouve au moins indirectement en liaison d'entraînement avec le moyeu de roue (8) et un stator (4) ;
1.2 la machine d'entraînement électrique (2) étant au moins partiellement disposée à l'intérieur d'une zone circonscrite par l'étendue axiale de la jante de roue (6) ;
1.3 avec un dispositif de freinage (18) associé à la roue (5), comprenant un dispositif de frein à disque (19) avec un disque (39), assemblé de manière solidaire en rotation avec le moyeu de roue (8), et avec un étrier de frein (38) associé au disque (39) et un dispositif d'actionnement (29) agissant sur l'étrier de frein (38) ;
1.4 le dispositif de freinage (29) étant disposé dans le sens axial à proximité spatiale immédiate de la roue (5) ;
**caractérisé par** les éléments suivants :
1.5 le dispositif d'actionnement (29) est disposé au-dessus de l'étrier de frein (38) du dispositif de freinage (18) et s'étend dans le sens axial, vu en direction de l'axe médian du véhicule, sans dépasser les dimensions du dispositif de freinage (18) dans cette direction.

2. Dispositif d'entraînement de roue selon la revendication 1, **caractérisé par** les éléments suivants :
2.1 le dispositif d'actionnement (29) comprend au moins un élément d'actionnement (36) qui agit sur un levier d'actionnement (51) articulé sur l'étrier de frein (38) ;
2.2 le levier d'actionnement (51) est parallèle ou incliné par rapport à une parallèle à l'axe de la roue (5) et orienté en direction de la roue (5).

3. Dispositif d'entraînement de roue selon la revendication 2, **caractérisé en ce que** l'élément d'actionnement (36) comprend une unité de vérin, dont le piston (50) est articulé au levier d'actionnement (51 ).

4. Dispositif d'entraînement de roue selon la revendication 3, **caractérisé en ce que** l'unité de vérin est inclinée par rapport à la verticale.

5. Dispositif d'entraînement de roue selon la revendication 3, **caractérisé en ce que** le levier d'actionnement (51) est incliné par rapport à la verticale.

6. Dispositif d'entraînement de roue selon l'une quelconque des revendications 1 à 5, **caractérisé en ce qu'**un élément de structure (15) portant le stator (4) forme l'essieu de roue (12).

7. Dispositif d'entraînement de roue selon la revendication 6, **caractérisé en ce que** le stator (4) et l'élément portant le stator (15) sont formés d'un seul élément de structure.

8. Dispositif d'entraînement de roue selon la revendication 6, **caractérisé en ce que** le stator (4) et l'élément portant le stator (15) sont formés par au moins deux éléments qui forment une unité de structure dans l'état assemblé par adhérence et/ou engagement positif et/ou solidarité de matériau.

9. Dispositif d'entraînement de roue selon l'une quelconque des revendications 1 à 8, **caractérisé en ce que** le rotor (4), vu dans le sens axial, est disposé entre une unité de palier intérieure (17) et une unité de palier extérieure (16) pour soutenir le moyeu (8) sur l'essieu de roue (12).

10. Dispositif d'entraînement de roue selon l'une quelconque des revendications 1 à 9, **caractérisé en ce qu'**il est prévu en aval de la machine d'entraînement électrique (2) dans le sens de transmission de la force un dispositif de conversion de la vitesse de rotation en couple de rotation (26) qui peut être couplé au moins indirectement avec le moyeu de roue (8).

11. Dispositif d'entraînement de roue selon la revendication 10, **caractérisé en ce que** le dispositif de conversion de la vitesse de rotation en couple de rotation comprend au moins un engrenage à train planétaire (30).

12. Dispositif d'entraînement de roue selon la revendication 11, **caractérisé en ce que** l'accouplement entre l'engrenage à train planétaire (30) et le moyeu de roue (8) est réalisé par un arbre d'entraînement (31) relié de manière solidaire en rotation avec le moyen de roue (8) et couplé à la sortie de l'engrenage à train planétaire (30).

13. Dispositif d'entraînement de roue selon l'une quelconque des revendications 1 à 12, **caractérisé en ce que** le disque de frein (50) s'appuie sur l'essieu de roue (12) par l'intermédiaire de l'unité de palier intérieure (17).

14. Dispositif d'entraînement de roue selon l'une quelconque des revendications 1 à 13, **caractérisé en ce que** la machine d'entraînement électrique (2) est conçue comme un moteur à flux transversal.

15. Dispositif d'entraînement de roue selon la revendication 14, **caractérisé par** les éléments suivants :
15.1 le rotor (3) comprend un disque de support (9) et au moins une structure de pôles (10, 11) s'étendant dans le sens axial en s'écartant du disque de support et disposée sur celui-ci ;
15.2 chaque structure de pôles (10, 11) comprend deux rangées (22, 23, 24, 25) juxtaposées, séparées par une couche intermédiaire (20, 21) en matériau non conducteur magnétique ni électrique (anneau intermédiaire), d'aimants (22a, 23a, 24a, 25a) magnétisés alternativement dans le sens de la circonférence avec des éléments intercalaires en fer doux (22b, 23b, 24b, 25b) entre eux.

16. Dispositif d'entraînement de roue selon la revendication 15, **caractérisé en ce que** le disque de support (9) comprend deux structures de pôles (10, 11) s'étendant des deux côtés dans le sens axial à partir du disque de support (9) et disposées sur celui-ci.

17. Dispositif d'entraînement de roue selon l'une quelconque des revendications 14 à 16, **caractérisé en ce que** le stator (4) comprend au moins un stator extérieur (14a, 14b) qui est disposé, vu dans le sens radial, sur un diamètre plus grand que le diamètre de la circonférence extérieure du rotor (3).

18. Dispositif d'entraînement de roue selon l'une quelconque des revendications 14 à 17, **caractérisé en ce que** le stator (4) comprend un stator intérieur (13b, 14b).

19. Dispositif d'entraînement de roue selon l'une quelconque des revendications 14 à 18, **caractérisé en ce que** le rotor (3) et/ou le stator (4) ou l'élément portant le stator (15) forment chacun au moins un espace intermédiaire extérieur (62) dans le sens radial et **en ce qu'**il est prévu des moyens (60) pour le couplage de l'alimentation en lubrifiant du dispositif de conversion de la vitesse de rotation en couple de rotation (26) avec les espaces intermédiaires (62).

20. Dispositif d'entraînement de roue selon la revendication 19, **caractérisé en ce que** les moyens de couplage et de remplissage au moins indirect d'une partie des espaces intermédiaires (62) entre le rotor (3) et le stator (4) ou entre le rotor (3) et l'élément portant le stator (15) comprennent au moins un canal prévu dans l'élément portant le stator (15) et pouvant être couplé au moins indirectement avec le dispositif d'alimentation en lubrifiant.
